# FASCICULE DE BREVET EUROPEEN

(11) **EP 1 348 204 B1**
(45) Date de publication et mention de la délivrance du brevet: **19.06.2013**
(21) Numéro de dépôt: 01272633.7
(22) Date de dépôt: 27.11.2001
(51) Int. Cl.: G07C 9/00, G07B 15/02, G06K 19/07, G06K 7/00

(54) **SYSTEME DE DETECTION DU PASSAGE D'INDIVIDUS OU OBJETS PAR UNE ENTREE-SORTIE A UN ESPACE DELIMITE**
SYSTEM ZUM ERFASSEN DES PASSIERENS EINER PERSON ODER EINES GEGENSTANDES DURCH EINEN EINGANG/AUSGANG IN EINEN BEGRENZTEN RAUM
SYSTEM FOR DETECTING INDIVIDUALS OR OBJECTS PASSING THROUGH AN ENTRANCE-EXIT OF A DEFINED SPACE

(30) Priorité: 29.12.2000 EP 00204758
(43) Date de publication de la demande: 01.10.2003
(73) Titulaire: EM Microelectronic-Marin SA, 2074 Marin (CH)
(72) Inventeur: DEGRAUWE, Marc, CH-2025 Chez-le-Bart (CH); DESJEUX, Olivier, CH-2525 Le Landeron (CH); ROZ, Thierry, CH-2208 Les Hauts-Geneveys (CH)
(74) Mandataire: Surmely, Gérard
(86) Numéro de dépôt international: PCT/EP2001/014139
(87) Numéro de publication internationale: WO 2002/054354

(56) Documents cités:
- EP-A- 0 380 400
- EP-A- 0 402 129
- EP-A- 0 465 456
- EP-A- 1 065 625
- WO-A-00/67208
- WO-A-92/08148
- GB-A- 2 246 896
- US-A- 4 459 474
- US-A- 5 914 671
- US-A- 6 097 301

## Description

L'invention concerne la détection d'individus ou objets, équipés d'unités électroniques comprenant des moyens de réception et d'émission de signaux électromagnétiques, susceptibles d'entrer ou sortir d'un espace délimité par au moins une entrée-sortie.

Le système comporte un dispositif de détection associé à cet espace délimité et comprenant également des moyens d'émission et de réception de signaux électromagnétiques.

Il est connu du document US 4,459,474 un système de détection du passage d'un dispositif d'identification portable par une entrée-sortie définissant un passage d'une certaine longueur. Il est prévu deux récepteurs placés chacun à une extrémité du passage et le dispositif d'identification émet un signal de manière répétitive. Le système comprend des moyens pour mesurer l'amplitude du signal reçu par chacun des deux récepteurs et pour suivre l'évolution temporelle de cette amplitude. Le sens de passage est obtenu par une détermination de la succession des deux pics d'amplitude mesurés par les deux récepteurs. Un tel système est relativement complexe. Ensuite le dispositif portable doit émettre de manière quasi continue. Ceci consume beaucoup d'énergie et ne permet pas au système de traiter le passage en groupe de plusieurs dispositifs portables.

Il est aussi connu du document EP 0 465 456 un système de perception du prix du transport dans un réseau de transport en commun, ce système étant agencé pour définir le prix de manière automatique et sans opération manuelle. Les usagers sont équipés de supports électroniques sans contact et agencés pour fournir un code personnel à des détecteurs de proximité agencés dans les passages obligés du réseau. Pour déterminer un sens de passage, ce document propose d'installer un dispositif complémentaire avec deux détecteurs de passage agencés en cascade à chaque accès, notamment à l'aide de cellules photoélectriques. Un tel système est onéreux et demande l'installation de divers appareils à chaque accès. De plus, à nouveau, il n'est pas adapté au passage en groupe de plusieurs personnes.

Il est encore connu du document EP 0 380 400 un dispositif de contrôle électronique du sens de passage de clients à l'entrée d'un magasin. Le dispositif sans contact proposé comprend, dans un passage en forme de couloir, au moins une paire d'émetteurs directionnels d'un côté du couloir et un récepteur en face, de l'autre côté du couloir, pour chaque émetteur. Le passage d'une personne interrompt la réception et la succession des interruptions de réception par les récepteurs donne le sens de passage. Un tel système adapté à un magasin ne permet pas d'identifier les personnes qui entrent ou sortent. Il ne présente pas d'intérêt dans le cadre de la présente invention.

Il est connu finalement du document WO 00/67208, une installation de gestion de tickets de transport électroniques. Au passage d'une entrée-sortie d'un véhicule, les tickets électroniques sont activés par un signal basse fréquence et ils émettent en réponse un signal d'identification. Une fois le véhicule en marche, un lecteur à haute fréquence interroge les tags activés présents à l'intérieur du véhicule pour définir les personnes embarquées. Ce document ne décrit pas de système permettant de détecter le sens de passage d'un individu équipé d'un ticket électronique dans la zone entrée-sortie du véhicule, notamment lorsque ce dernier est à l'arrêt.

Le but de la présente invention est de fournir un système de détection du passage d'un individu ou objet par une entrée-sortie qui permet de détecter le sens du passage dans la zone d'entrée-sortie et de déterminer de manière sûre si cet individu ou objet est situé à l'intérieur ou à l'extérieur dudit espace déterminé, en particulier après fermeture de ladite entrée-sortie.

Un autre but est de fournir un système efficace de détection des entrées ou sorties d'individus ou d'objets susceptibles de pénétrer dans un espace délimité, tout en limitant le procédé de détection à des périodes de communication limitées, en particulier sensiblement limitées aux périodes d'ouverture de ladite entrée-sortie.

A cet effet, l'invention concerne premièrement un système tel que défini à la revendication 1 ci-jointe.

Grâce aux caractéristiques de ce système, il est possible de détecter le sens de passage d'un individu ou objet par une entrée-sortie et de déterminer si un individu ou objet, ayant pénétré une zone définie par des première et deuxième régions de communication associées à des premier et deuxième signaux différents émis par des moyens d'émission agencés dans la région de cette entrée-sortie, est situé à l'intérieur de l'espace délimité en particulier après fermeture de cette entrée-sortie.

Ce système est particulièrement efficace étant donné que le troisième signal fourni par les unités électroniques au dispositif de détection, pour l'informer sur leur position ou sur leur état "dedans/dehors", est émis à relativement haute fréquence, alors que les premier et deuxième signaux émis par le dispositif de détection sont à relativement basse fréquence. Ainsi, d'une part, les première et deuxième régions de communication peuvent être peu étendues dans la zone d'entrée-sortie et sensiblement bien définies, ce qui permet de les orienter de manière à ce qu'elles soient au moins en partie séparées pour la détection du sens de passage. D'autre part, la communication à relativement haute fréquence des unités électroniques vers le dispositif de détection permet d'envoyer des données à haute densité et dans une région relativement étendue, ce qui augmente le temps disponible pour cette communication et permet notamment la mise en oeuvre d'un protocole d'anti-collision efficace lors du passage quasi simultané de plusieurs unités électroniques.

Grâce aux caractéristiques du système selon l'invention, le traitement de la réception des premier et deuxième signaux émis par le dispositif de détection associé à l'espace délimité surveillé est effectué au moins partiellement par les unités électroniques. Dans une variante particulière, l'unité électronique détecte le début et la fin de la réception de chacun de ces signaux. Dans un mode préféré, l'unité électronique détermine si elle est, selon le procédé de détection de son passage par ladite entrée-sortie, à l'intérieur ou à l'extérieur dudit espace délimité, information qu'elle communique au dispositif de détection.

Ainsi, le nombre de communications avec le dispositif de détection peut être limité au minimum, minimisant les collisions possibles entre les émissions des unités électroniques portables. Ensuite, dans une variante préférée, l'information est communiquée seulement à la sortie des première et deuxième régions de communication de manière à éviter une alternance de messages contradictoires dans la zone d'entrée-sortie.

De manière plus générale, l'invention concerne également un système tel que défini à la revendication 9, dans lequel le troisième signal émis par les unités portables a une fréquence quelconque.

Dans un mode de réalisatin préféré, l'unité électronique n'envoie pas en permanence un signal ou une réponse aux premier et deuxième signaux, mais communique une information au moins sur la réception dudit premier signal et/ou dudit deuxième signal seulement à la fin de leur réception, de préférence rapidement après la détection de cette fin de réception.

La présente invention peut servir à la détection d'individus ou d'objets entrant et/ou sortant d'un moyen de transport, tel un bus, un métro, un train ou un avion. Le système de la présente invention peut aussi être utilisé pour surveiller l'accès à un bâtiment, une salle ou tout espace délimité.

L'invention sera exposée plus en détail ci-après à l'aide de la description suivante, faite en référence au dessin ci-annexé donné à titre d'exemple nullement limitatif, dans lequel :
- la figure 1 représente schématiquement un moyen de transport de personnes, notamment un wagon de train ou un bus, dans lequel est intégré un dispositif de détection selon l'invention ;
- la figure 2 représente schématiquement une unité électronique du système de détection selon l'invention ;
- la figure 3 représente schématiquement un agrandissement d'une entrée-sortie à l'espace délimité représenté à la figure 1 ;
- les figures 4a et 4b représentent divers signaux reçus, engendrés et émis par l'unité électronique portable respectivement lors d'une entrée et d'une sortie par ladite entrée-sortie ; et
- la figure 5 représente de manière plus détaillée une communication entre une unité électronique et un récepteur du dispositif de détection selon l'invention.

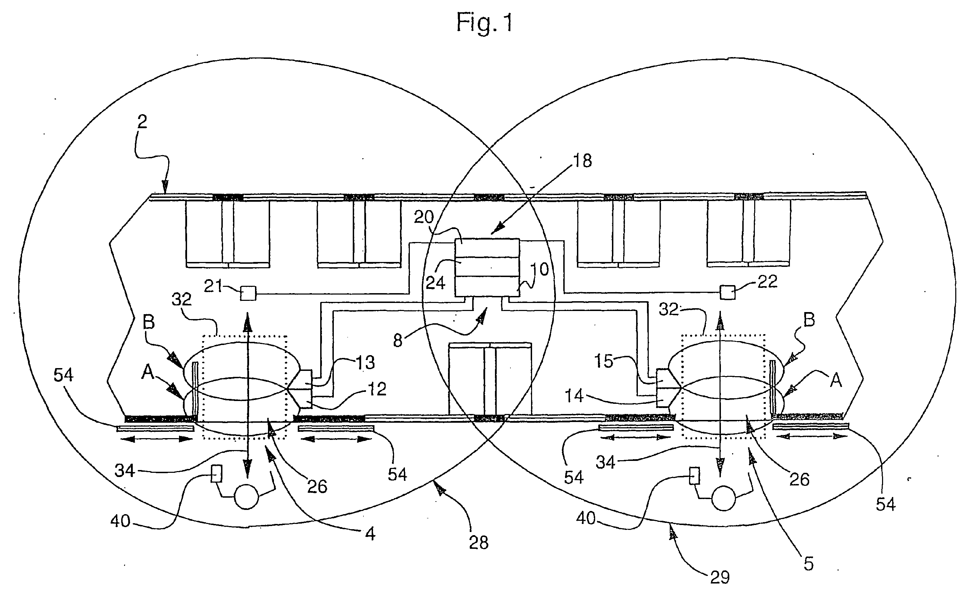

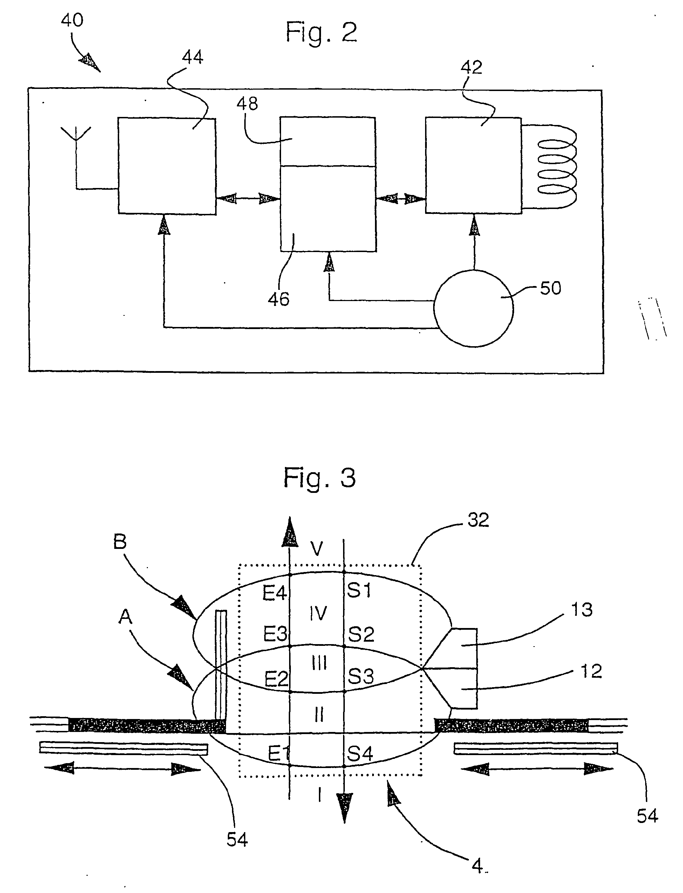

A l'aide des figures 1 et 2, on décrira un système de détection d'individus ou d'objets selon l'invention. Ce système comprend d'une part un dispositif de détection associé à un espace délimité 2 et d'autre part des unités électroniques portables destinées aux individus ou objets dont l'entrée ou la sortie dans l'espace 2 est surveillée, c'est à dire détectée. Le dispositif de détection est représenté schématiquement à la figure 1 alors que l'unité électronique portable est représentée schématiquement à la figure 2. Le dispositif de détection est prévu pour la détection du passage d'individus par deux entrées-sorties 4 et 5 permettant un accès à l'espace 2. Pour permettre une détection selon l'invention à chacune des deux entrées-sorties, le dispositif de détection comprend des moyens d'émission à relativement basse fréquence 8, notamment de l'ordre d'une centaine de KHz. Ces moyens d'émission à relativement basse fréquence comprennent un circuit électronique 10 relié d'une part à deux antennes 12 et 13 agencées à l'entrée-sortie 4 et d'autre part à deux antennes 14 et 15 agencées à l'entrée-sortie 5. L'antenne 12, respectivement 14 émet un premier signal à basse fréquence dans une première région de communication A. L'antenne 13, respectivement 15 émet un deuxième signal à relativement basse fréquence dans une deuxième région de communication B. En particulier, les premier et deuxième signaux ont la même fréquence et sont émis périodiquement, en alternance. Dans ce cas, ces signaux sont différenciés par l'information fournie.

Selon un premier mode de réalisation, le dispositif de détection comprend en outre des moyens de réception 18 à relativement haute fréquence, notamment de l'ordre d'une centaine de MHz ou plus. Ces moyens de réception 18 comprennent un circuit électronique 20 et deux antennes de réception 21, 22 agencées respectivement en regard des entrées-sorties 4 et 5. Finalement il est prévu une unité électronique centrale 24 servant à la gestion des moyens d'émission 8 et des moyens de réception 18. De plus, cette unité centrale comprend également des moyens de gestion des données ou informations reçues des unités électroniques entrant ou sortant dans l'espace délimité 2. A cet effet, cette unité 24 comprend des moyens pour enregistrer notamment les codes des unités électroniques entrant ou sortant et également d'autres informations, notamment la station dans laquelle une unité électronique est entrée dans l'espace 2 ou sortie de cet espace. On peut également prévoir l'enregistrement de données horaires ainsi que la date de chacune des entrées ou sorties d'une unité électronique portable associée au système de détection selon l'invention. L'unité centrale 24 peut en outre comprendre des moyens pour la gestion d'un protocole d'anti-collision, en particulier pour la réception à relativement haute fréquence de données envoyées par les unités électroniques portables.

Les régions de communication à basse fréquence A et B sont au moins partiellement séparées l'une de l'autre. A la figure 1, les régions A et B sont partiellement superposées. La première région A présente une partie 26 non superposée à la deuxième région B. Cette partie 26 est située du côté de l'extérieur de l'entrée-sortie 4, respectivement 5 par rapport à la deuxième région B. Les moyens de réception à relativement haute fréquence 18 sont agencés de manière que les antennes de réception 21 et 22 peuvent recevoir des signaux émis par les unités portables, dans la fréquence de réception prévue, respectivement à l'intérieur de troisièmes régions de communication 28 et 29.

Les régions de communication A et B traversent chacune une zone d'entrée-sortie 32 définie par chaque entrée-sortie 4, 5. Chaque entrée-sortie 4, 5 est agencée de manière qu'un individu entrant ou sortant dans l'espace 2 doit obligatoirement passer à travers chacune des régions A et B. En d'autres termes, chaque individu entrant ou sortant traverse la zone d'entrée-sortie 32, laquelle est traversée perpendiculairement à la direction de passage 34 par les deux régions A et B.

Etant donné que les divers éléments du dispositif de détection prévus aux entrées-sorties 4 et 5 sont identiques, on ne considérera par la suite que l'entrée-sortie 4 pour décrire plus en détail le système de détection selon l'invention.

Les unités électroniques portables 40 comprennent des moyens de réception à relativement basse fréquence 42 agencées pour recevoir les premier et deuxième signaux fournis par les moyens d'émission 8 décrits ci-avant. Ensuite, l'unité portable 40, selon le premier mode de réalisation décrit ici, comporte des moyens d'émission à relativement haute fréquence 44 d'au moins un troisième signal susceptible être reçu par les moyens de réception 18 décrits ci-avant. L'unité 40 comprend également un circuit électronique 46 comprenant un microprocesseur ou microcontrôleur et associé à une mémoire 48. Les divers éléments de l'unité 40 sont alimentés par une batterie ou pile 50. Un des buts de l'invention est bien entendu de limiter la consommation d'énergie de l'unité portable 40, laquelle se présente notamment sous forme de carte ou de ticket électronique.

Les régions de communication 28 et 29 couvrent de préférence la totalité de l'espace délimité 2. Si nécessaire, on peut prévoir un plus grand nombre d'antennes à relativement haute fréquence. Au cas où un troisième signal fourni par une unité portable passant par l'entrée-sortie 4 n'est pas reçu par l'antenne 21, ce signal peut être reçu par une autre antenne, notamment l'antenne 22 associée à l'espace délimité.

Selon une variante préférée, il est prévu que l'unité portable 40 soit dans un mode de veille ou d'écoute à la fréquence des premier et deuxième signaux émis à relativement basse fréquence lorsqu'elle n'est pas située dans les régions A et B et que le procédé de détection d'une entrée ou d'une sortie par l'entrée-sortie 4 est terminé. L'unité 40 est agencée de manière a être activée au moins pour sa partie basse fréquence dès qu'elle reçoit le premier ou deuxième signal. Etant donné que le mode de veille ou d'écoute est prévu à relativement basse fréquence, la consommation hors périodes de détection est relativement faible. Ainsi, l'unité 40 est activée seulement pendant des périodes de détection à l'intérieur desquelles la consommation d'énergie est également minimisée.

Le système de détection comprend des moyens pour détecter le sens de passage d'un individu ou objet équipé d'une desdites unités électroniques portables 40. Cette détection du sens de passage est une fonction de la réception des premier et deuxième signaux à relativement basse fréquence par l'unité électronique. Lors de l'entrée dans la région de communication A ou B, ces moyens sont activés directement suite au réveil de l'unité 40. Les régions A et B étant relativement bien définies et couvrant des espaces distincts selon la direction de passage 34, les moyens de détection du sens de passage selon l'invention utilisent la succession des régions A et B dans la zone d'entrée 32, ces deux régions étant au moins partiellement séparées spatialement. Selon une variante, l'unité portable 40, après avoir détecté au moins un des premier et deuxième signaux, fournit au dispositif de détection fixe au moins une information relative à la réception du premier signal et/ou du deuxième signal. On notera que l'unité portable 40 peut envoyer cette information par un signal émis de manière périodique et que les informations contenues dans ce signal peuvent changer selon la position ou l'état de l'unité portable. Par simplification, on mentionnera que l'unité portable envoie un troisième signal relatif à la réception du premier signal et/ou du deuxième signal susmentionnés, étant compris que l'unité portable peut envoyer plusieurs signaux pour communiquer successivement des informations différentes relatives à la réception des premier et deuxième signaux, y compris la fin de leur réception.

Dans le premier mode de réalisation décrit ici, le troisième signal est fourni par l'unité portable 40 à la fréquence des moyens de réception 18. La région de communication 28 à cette relativement haute fréquence est bien plus étendue que les régions A et B. On notera ici que la forme ovoïdale pour la troisième région 28 est schématique. Toutefois, il est prévu que cette région 28 associée à l'antenne de réception 21 couvre les première et deuxième régions A et B et qu'elle s'étende également de part et d'autre de ces deux régions selon la direction de passage 34. Ceci permet des communications entre les unités portables 40 et le dispositif de détection associé à l'espace délimité 2, en entrée et en sortie, après que ces unités soient sorties respectivement de la région B et de la région A. Ainsi, en particulier lors d'une sortie par l'entrée-sortie 4, l'unité portable peut communiquer une information suite à la détection de la fin de réception du premier signal. Cet agencement permet de réaliser certaines variantes avantageuses du système selon l'invention et permet d'augmenter la quantité d'informations transmises entre l'unité portable et le dispositif de détection associé à l'espace 2; ceci en entrée et en sortie de cet espace. En effet, le temps de communication entre l'unité portable et le dispositif de détection fixe n'est pas limité à la région définie par les régions A et B dans la zone d'entrée 32.

Dans une première variante relativement simple, le dispositif de détection détermine seulement quel est le signal parmi lesdits premier et deuxième signaux qui est reçu en dernier. Si c'est le premier signal, le système considère que l'unité portable 40 est soit sortie si elle était à l'intérieur de l'espace 2, soit qu'elle est restée dehors. Si c'est le deuxième signal qui est reçu en dernier, le système considère que l'unité portable est soit entrée dans l'espace 2 si elle n'y était pas, soit qu'elle est restée à l'intérieur de cet espace.

Dans une deuxième variante, il est prévu des moyens pour déterminer quel est le signal reçu en premier et quel est le signal reçu en dernier à l'intérieur d'une période de détection donnée. Les moyens de détection du sens de passage sont agencés pour enregistrer une unité portable 40 dans l'état "dedans" lorsque le signal reçu en premier est ledit premier signal et que le signal reçu en dernier est ledit deuxième signal. Par contre, elle enregistre cette-unité électronique dans l'état "dehors" lorsque le signal reçu en premier est ledit deuxième signal et que le signal reçu en dernier est ledit premier signal. On notera que si le signal reçu en premier est identique au signal reçu en dernier, l'état de l'unité portable ne change pas. Dans un tel cas, l'unité centrale 24 peut contrôler que les informations enregistrées sont conformes à ce résultat.

La présente invention se distingue en particulier par le fait que la détection de la présence d'individus ou d'objets dans un espace délimité peut être limitée à des périodes de détection données, relativement brèves, correspondant notamment sensiblement à la durée d'ouverture des portes 54 (figure 1) servant à la fermeture des entrées-sorties 4 et 5.

Selon une variante du système de détection de l'invention, il est prévu, dans une phase finale d'une période de détection, de fermer l'entrée-sortie considérée et ensuite ou sensiblement simultanément de modifier le premier signal pour que celui-ci devienne identique au deuxième signal. Finalement, l'émission des premier et deuxième signaux est interrompue, notamment en diminuant progressivement la puissance d'émission. Pour permettre la détection du sens de passage lorsque l'entrée-sortie est ouverte, les premier et deuxième signaux sont bien entendu différents l'un de l'autre ; ceci pour permettre aux unités portables de distinguer ces premier et deuxième signaux. Par contre, lors de la fermeture de l'entrée-sortie, il est possible que certaines unités portables 40 demeurent à proximité des portes fermées et se trouvent ainsi à l'intérieur de l'espace délimité 2 sans avoir reçu le deuxième signal. Ce problème est résolu par la variante décrite ici étant donné que dans une phase finale, le premier signal est rendu identique au deuxième signal de sorte qu'une unité portable, restée dans la partie 26 de la région de communication A ou dans cette région A si la réception du deuxième signal dans la zone d'intersection n'est pas déterminante pour définir l'état "dedans", reçoit en dernier un signal correspondant au deuxième signal. Ainsi, les moyens de détection du sens de passage enregistrent donc aussi des unités portables demeurées à proximité des portes à l'intérieur de l'espace délimité comme étant "dedans". Cette variante est particulièrement efficace lorsqu'il s'agit d'un moyen de transport et que cette phase finale est prévue après que ce moyen de transport se soit déplacé relativement à sa position d'arrêt, car alors des unités portables situées à l'extérieur ne seront pas à tord enregistrées "dedans".

Un problème analogue peut intervenir dans une phase initiale de ladite période de détection. Si avant l'ouverture des portes et le début d'une période de détection, une unité portable située à l'intérieur de l'espace 2 se trouve à proximité de ces portes dans la partie non superposée 26 de la région A, cette unité portable, lors d'une sortie après l'ouverture des portes, n'aura reçu que le premier signal. Pour résoudre ce problème, il est prévu dans une phase initiale de ladite période de détection, que ledit premier signal émis dans la région A soit identique au deuxième signal, ledit premier signal étant ensuite modifié avant ou sensiblement simultanément à l'ouverture des portes de l'entrée-sortie considérée. Ainsi, cette unité électronique recevra premièrement un signal correspondant au deuxième signal puis un signal correspondant au premier signal.

Dans une variante simplifiée, on peut prévoir que la seule réception du premier signal par une unité portable, sans réception dudit deuxième signal, est enregistré comme une sortie de cette unité lorsque celle-ci était précédemment enregistrée à l'intérieur de l'espace délimité 2.

A l'aide de la figure 3, on décrira ci-après plus précisément les divers événements et positions ou états successifs intervenant pour une unité portable lors du passage à travers la zone d'entrée 32 de l'entrée-sortie 4. Lors d'un passage à travers les régions de communication A et B, dans le cas où celles-ci sont partiellement superposées l'une à l'autre, on peut essentiellement définir quatre événements et cinq positions ou états différents pour une unité portable entrant ou sortant par l'entrée-sortie considérée.

Par mesure de simplification, on utilisera ci-après A et B non seulement pour définir les régions de communication associées respectivement aux antennes 12 et 13, mais également pour définir respectivement une réception des premier et deuxième signaux. Par la suite, pour définir une non-réception des premier et deuxième signaux par une unité portable, on utilisera respectivement A*, B*. Ainsi, lors d'une entrée d'un individu ou objet muni d'une unité portable selon l'invention, quatre événements distincts E1 à A4 interviennent. De manière similaire, lors d'une sortie de cet individu ou objet, quatre événements distincts S1 à S4 interviennent. Ces événements sont définis de la manière suivante :
E1 = "début A" et B*
E2 = "début B" et A,
E3 = "fin A" et B,
E4 = "fin B" et A*,
S1 = "début B" et A*,
S2 = "début A" et B,
S3="fin B" et A,
S4 = "fin A" et B*.

Les cinq positions ou états distincts susmentionnés sont définis de la manière suivante :
I = A* et B*,
II = A et B*,
III = A et B,
IV = A* et B,
V = A* et B*.

En utilisant ces divers événements et les positions ou états rencontrés par une unité portable traversant la zone d'entrée 32, l'homme du métier peut prévoir de nombreuses variantes du système de réalisation décrit ici. Selon l'invention, il est prévu que les moyens de détection du sens de passage d'une unité électronique portable comprennent des moyens de traitement desdits premier et deuxième signaux qui sont agencés dans chacune des unités électroniques associées au système de détection. Il est prévu que ces moyens de traitement comprennent au moins des moyens de détermination du signal reçu en dernier ou du signal reçu en premier et du signal en dernier. Ainsi, la détermination du passage d'une unité électronique et de son état "dedans/dehors" est effectuée au moins partiellement dans cette unité.

En particulier, chaque unité électronique peut envoyer au dispositif de détection fixe une information concernant le dernier signal reçu dans une période de détection donnée. Selon une variante préférée, les moyens de traitement agencés dans l'unité portable comprennent des moyens pour détecter la fin de réception dudit premier signal et/ou dudit deuxième signal, un troisième signal d'information sur la position ou l'état d'une unité portable étant émis, éventuellement selon un protocole d'anti-collision, suite à la détection de la fin de réception de ce premier signal et/ou de ce deuxième signal. Cette détection de la fin de réception dudit premier ou deuxième signal permet à l'unité portable d'obtenir premièrement une double information, à savoir que la réception du premier ou deuxième signal a eu lieu et que cette réception a pris fin. D'autre part, cette détection de fin de réception peut servir de temps de référence pour l'envoi par l'unité portable d'un troisième signal.

Selon diverses variantes, les moyens de traitement des premier et deuxième signaux prévus dans les unités portables peuvent être agencés pour détecter et traiter un ou plusieurs des événements mentionnés ci-avant et/ou une ou plusieurs positions distinctes mentionnées ci-avant. Ces moyens de traitement peuvent également comprendre des moyens permettant d'établir la succession dans le temps de ces divers événements ou positions distinctes occupées par l'unité portable considérée lors d'un passage par une zone d'entrée.

Dans un deuxième mode de réalisation, il est prévu que le troisième signal donnant une information relative à la réception dudit premier signal et/ou dudit deuxième signal est émis par l'unité portable à relativement basse fréquence. Selon une variante particulière, les antennes 12 et 13 servent également à la réception de signaux envoyés par les unités électroniques portables, le dispositif de détection fixe comprenant à cet effet des moyens de réception à cette basse fréquence. La communication du troisième signal par une unité portable à destination du dispositif de détection fixe se fait alors exclusivement dans les régions de communication A et B. Cette variante se distingue par une simplification du dispositif de détection, mais présente l'inconvénient de diminuer le temps de communication entre les unités portables et le dispositif de détection fixe, ainsi que la densité de données par unité de temps. De plus, en prenant une même antenne pour l'émission du premier ou deuxième signal et la réception dudit troisième signal, on limite l'envoi de ces premier et deuxième signaux et également le temps d'écoute disponible pour le dispositif de détection. Toutefois, dans le cadre de cette variante, on peut notamment prévoir que les moyens de traitement de l'unité portable détermine le signal reçu en premier ainsi que la fin de sa réception. Si à la fin de cette réception l'autre signal est reçu, l'unité électronique envoie immédiatement un signal d'entrée ou de sortie selon que le signal reçu en premier est le premier signal ou le deuxième signal. Ainsi, en entrée, c'est l'antenne 13 qui reçoit le signal d'entrée. Par contre, en sortie, c'est l'antenne 12 qui reçoit le signal de sortie.

Dans une autre variante, il est prévu d'agencer des moyens de réception à basse fréquence spécifiques pour la réception des signaux fournis par les unités portables. On peut prévoir que la région de communication de ces moyens de réception couvre sensiblement les régions A et B. De préférence, il est prévu deux antennes de réception par entrée-sortie agencées de manière que leurs régions de communication respectives soient situées de part et d'autre des régions A et B. Ceci permet la mise en oeuvre de procédés de détection dans lesquels une information sur l'état "dedans/dehors" d'une unité électronique peut être envoyée par celle-ci après sa sortie des régions A et B. Par le fait que les moyens de traitement de la réception desdits premier et deuxième signaux sont prévus au moins en partie ou de préférence entièrement dans les unités portables, le nombre de signaux envoyés par ces unités portables est limité au minimum. En particulier, une fois que l'unité électronique a déterminé une sortie ou une entrée par une entrée-sortie considérée, elle communique un seul signal au dispositif de détection fixe pour l'informer de cette entrée ou sortie. Elle peut le faire notamment selon un protocole d'anti-collision que l'homme du métier sait mettre en oeuvre. Bien entendu, ce seul signal peut être émis périodiquement en répétant l'information à transmettre au moins jusqu'à sa réception correcte par le dispositif de détection fixe.

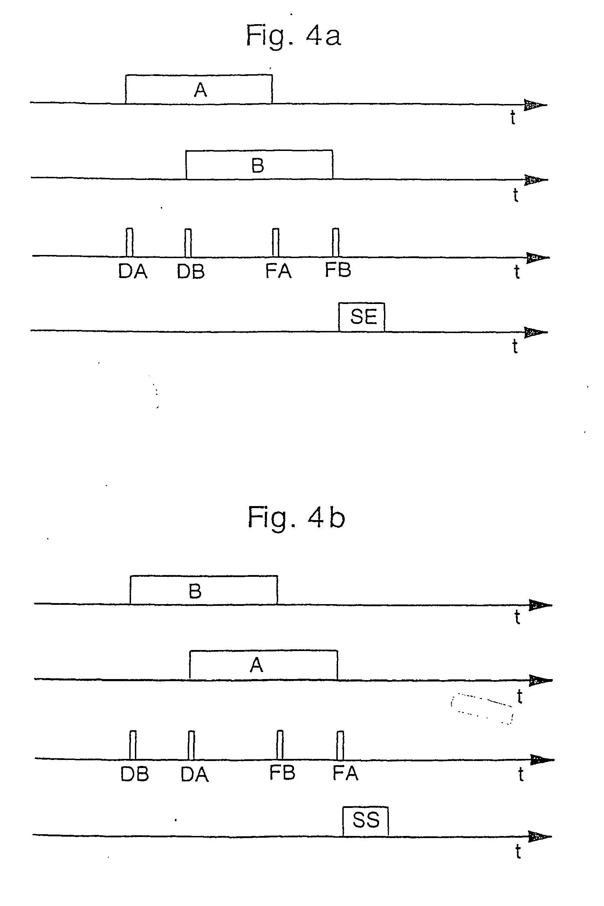

On décrira ci-après à la l'aide des figures 4a et 4b une variante du procédé de détection du passage d'une unité électronique par une entrée-sortie à un espace délimité et également du sens de ce passage pour déterminer si elle entre ou sort de cette espace délimité..

La figure 4a correspond à une entrée sensiblement selon la direction de passage 34 d'une unité portable selon l'invention. Sur les deux premières lignes temporelles, on a représenté la réception par une unité portable des premier et deuxième signaux référencés respectivement A et B. Des moyens de traitement agencés dans cette unité portable détectent le début et la fin de réception de chacun desdits premier et deuxième signaux. Ces moyens de traitement détectent donc les quatre événements E1 à E4 mentionnés précédemment. Pour chacun de ces événements, l'unité portable engendre un signal DA, respectivement DB, FA et FB qu'elle garde en mémoire. De plus, elle détermine au moins la relation temporelle entre FA et FB. Rapidement après la détection de la fin réception du deuxième signal, lorsque la fin de réception du premier signal est intervenue avant, l'unité électronique envoie un signal d'entrée SE au dispositif de détection fixe. Le signal SE peut contenir en autre des informations relatives à l'unité électronique, voire des informations reçues par les premier et deuxième signaux. Ici, l'élément déterminant pour l'émission du signal d'entrée SE est la détection de la fin de réception du deuxième signal, lequel est reçu en dernier. Ainsi, l'ensemble du procédé de détection de la présence d'une unité portable dans l'espace délimité est effectué lors de cette entrée. Dans une variante simplifiée, les débuts de réception ne sont pas enregistrés en tant que tel par l'unité portable. En effet, la seule détection de la fin de réception du premier signal et du deuxième signal suffit à la détermination d'une réception de ces deux signaux et à déterminer le sens de passage par une simple analyse de la relation temporelle entre FA et FB.

Par fin de réception d'un signal, on comprend que l'amplitude du signal reçu ne permet plus de décoder l'information contenue dans ce signal ou que cette amplitude est inférieure à un seuil ou à une valeur de référence fixe ou variable.

Dans une variante plus élaborée, il est prévu que l'unité portable envoie un troisième signal rapidement et de préférence directement après que le signal FA soit engendré et alors que le deuxième signal est reçu. Ce signal peut notamment être un signal d'interrogation du dispositif de détection fixe pour recevoir diverses données ou paramètres pouvant être utilisées ensuite lors de l'envoi du signal SE, notamment les paramètres d'un protocole d'anti-collision qui sera décrit ci-après.

Dans une autre variante, la détection de fin de réception du premier signal, alors que le deuxième signal est reçu, peut par exemple servir de temps de référence pour activer la partie haute fréquence de l'unité électronique lorsqu'il est prévu d'envoyer notamment le signal SE à haute fréquence comme dans le cadre du premier mode de réalisation.

Ces considérations relatives à la figure 4a s'appliquent par analogie lors d'une sortie d'une unité portable qui va être décrite rapidement à l'aide de la figure 4b. Par rapport à la figure 4a, la succession de la réception des premier et deuxième signaux est inversée. Par conséquent, le signal DB, respectivement FB est engendré avant le signal DA, respectivement FA. Après la détection de la fin de réception du premier signal, alors que la fin de réception du deuxième signal est déjà intervenue, l'unité portable envoie rapidement un signal de sortie SS au dispositif de détection fixe. Ainsi, même en sortie, l'unité portable traite l'information relative à la réception des premier et deuxième signaux et fournit dès la sortie de la région A un signal de sortie qui peut être reçu par les moyens de réception du dispositif de détection fixe associés à l'espace délimité.

On notera que la mémorisation du signal DA, respectivement DB jusqu'à l'apparition du signal FA ou FB permet de déterminer si, à un moment donné, le premier signal et/ou le deuxième signal sont reçus par l'unité portable considérée. L'homme du métier peut concevoir d'autres moyens équivalents permettant de déterminer si, à un moment donné, les premier et/ou deuxième signaux sont reçus.

La détection de la fin de réception d'un signal peut être effectuée simplement au moyen d'une horloge interne quelconque permettant de définir un certain intervalle de temps. Si le signal considéré n'est pas reçu dans cet intervalle de temps alors qu'il était reçu précédemment, les moyens de détection du sens de passage d'une unité portable engendrent le signal FA ou FB. La durée sélectionnée pour l'intervalle de temps tient compte en particulier du fait que les premier et deuxième signaux sont envoyés périodiquement et en alternance lorsqu'ils ont la même fréquence.

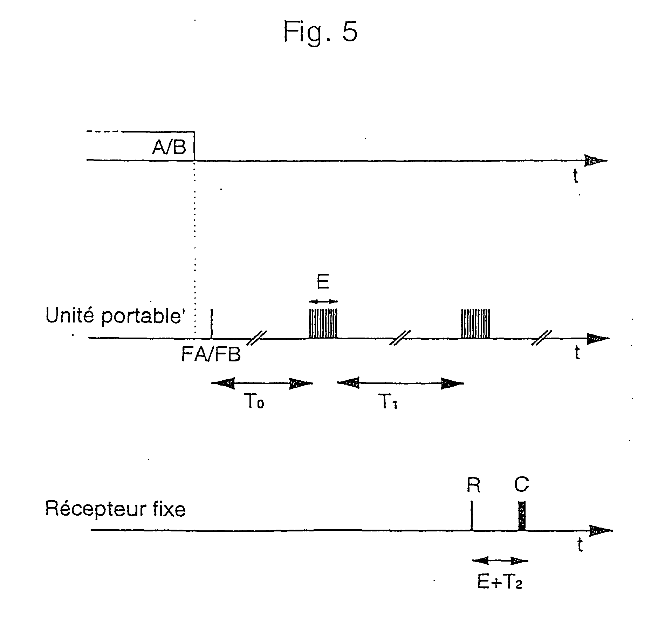

A la figure 5 est représenté schématiquement une communication entre une unité portable et un récepteur correspondant du dispositif de détection fixe. Comme cela vient d'être mentionné, lorsque l'unité portable détecte la fin de la réception du premier ou deuxième signal, elle engendre un signal FA/FB de détection de fin de réception après un intervalle de temps relativement court suite à la fin effective de la réception. L'unité portable envoie son troisième signal en répétant n fois l'information à transmettre dans un premier intervalle de temps E intervenant après un temps initial T₀. L'unité portable est agencée pour envoyer à nouveau le troisième signal n fois durant un deuxième intervalle de temps E; et ceci m fois. Les intervalles de temps d'émission E sont séparés par des intervalles de temps d'écoute T₁. Dès que le récepteur fixe reçoit correctement l'information transmise par l'unité portable, c'est-à-dire reçoit un signal R, ce récepteur envoie un signal de confirmation C de la réception du signal R après un intervalle de temps égal à E + T₂, T₂ étant prévu plus court que T₁. Dès que l'unité portable reçoit le signal C, elle interrompt de suite l'émission de son troisième signal.

Ainsi, plusieurs paramètres interviennent pour l'émission du troisième signal, à savoir T₀, E, T₁ et également n et m. Ces divers paramètres peuvent être utilisés dans le cadre d'un protocole d'anti-collision. Au moins certains de ces paramètres peuvent être déterminés par l'unité portable elle-même, de manière déterminée, pseudo-aléatoire ou aléatoire. Selon une variante, ces paramètres sont déterminés au moins partiellement par les données contenues dans les premier et deuxième signaux. Dans une autre variante, les paramètres sont au moins partiellement déterminés par la réception d'un signal propre au protocole d'anti-collision fourni par le dispositif de détection fixe à relativement haute fréquence.

On remarquera cependant que le fait de prévoir l'émission du troisième signal suite à la fin de la réception du premier ou deuxième signal et de préférence des premier et deuxième signaux limite fortement le risque de collision lors de l'émission des troisièmes signaux par plusieurs unités portables passant par une entrée-sortie. De fait, le protocole d'anti-collision décrit à l'aide de la figure 5 s'avère utile plus particulièrement lorsqu'une personne est munie de plusieurs unités portables, comme cela peut être le cas lors d'un voyage en équipe où un responsable porte l'ensemble des unités portables des individus formant cette équipe.

Finalement, la présente invention peut aussi s'appliquer à d'autres systèmes de détection équivalents ou similaires, notamment dans des aéroports ou des stations de métros. On peut par exemple prévoir que les premier et deuxième signaux soient émis par un émetteur agencé dans le moyen de transport, mais que l'unité électronique communique sa sortie à un récepteur agencé hors du moyen de transport, notamment dans un couloir de station de métro ou à un portillon d'accès à cette station.

Dans une autre variante, l'ensemble du dispositif de détection fixe est installé hors du moyen de transport, notamment dans la région d'un portillon d'accès à une station de métro ou de train. Dans un tel cas, la notion d'espace délimité doit être comprise de manière étendue, comme comprenant le moyen de transport avec les stations dans lesquels il est prévu qu'il s'arrête ou comprenant l'ensemble des stations d'un réseau de transport avec les véhicules.

## Revendications

1. Système de détection du passage d'individus ou d'objets par une entrée-sortie (4, 5) à un espace délimité (2) comprenant :
- des premiers moyens d'émission (8) à relativement basse fréquence formant un dispositif de détection associé audit espace délimité, ces premiers moyens d'émission étant agencés pour émettre des premier et deuxième signaux différents dans respectivement des première et deuxième régions de communication (A, B) au moins partiellement séparées l'une de l'autre, ces première et deuxième régions traversant chacune une zone d'entrée-sortie (32) définie par ladite entrée-sortie;
- des unités électriques portables (40) comprenant des premiers moyens de réception (42) desdits premier et deuxième signaux et des deuxièmes moyens d'émission (44) d'au moins un troisième signal, ces unités étant destinées auxdits individus ou objets;
- des deuxièmes moyens de réception (18) formant en outre ledit dispositif de détection, ces deuxièmes moyens de réception étant agencés pour pouvoir recevoir ledit troisième signal;
ce système comprenant en outre des moyens de détection du sens de passage d'un individu ou objet équipé d'une desdites unités électroniques portables en fonction de la réception desdits premier et deuxième signaux, ces moyens de détection étant agencés pour être activés au moins dès que cette unité reçoit l'un des premier ou deuxième signaux, lesdits deuxièmes moyens d'émission et lesdits deuxièmes moyens de réception fonctionnant à relativement haute fréquence, ledit troisième signal fournissant audit dispositif de détection au moins une information relative à la réception dudit premier signal et/ou dudit deuxième signal, lesdits moyens de détection du sens de passage comportant des moyens de traitement (46, 48) desdits premier et deuxième signaux agencés dans chacune desdites unités électroniques et comprenant des moyens de détermination du signal reçu en dernier ou du signal reçu en premier et du signal reçu en dernier.

2. Système selon la revendication 1, **caractérisé en ce que** lesdits deuxièmes moyens de réception sont agencés de manière qu'ils puissent recevoir ledit troisième signal fourni par une quelconque desdites unités électroniques situées dans une troisième région de communication (28, 29) qui couvre essentiellement lesdites première et deuxième régions de communication et qui déborde de part et d'autre de ces deux régions selon une direction de passage (34) par ladite entrée-sortie.

3. Système selon la revendication 1, **caractérisé en ce que** lesdits moyens de traitement comprennent des moyens pour détecter la fin de réception dudit premier signal et/ou dudit deuxième signal, ledit troisième signal étant émis, éventuellement selon un protocole d'anti-collision, suite à la détection de la fin de la réception dudit premier signal et/ou dudit deuxième signal.

4. Système selon la revendication 3, dans lequel ladite première région a une partie (26) non superposée à ladite deuxième région qui est située du côté de l'extérieur de ladite entrée-sortie relativement à cette deuxième région, **caractérisé en ce qu'**une quelconque des unités électroniques, après détection d'une fin de réception desdits premier et deuxième signaux dans une période de détection donnée, envoie par lesdits deuxièmes moyens d'émission, d'une part, un signal d'entrée lorsque les signaux reçus en premier et en dernier sont respectivement lesdits premier et deuxième signaux et, d'autre part, un signal de sortie lorsque les signaux reçus en premier et en dernier sont respectivement lesdits deuxième et premier signaux.

5. Système selon la revendication 4, **caractérisé en ce que** ledit signal d'entrée ou de sortie est émis rapidement, éventuellement selon un protocole d'anti-collision, après la détection de la fin de la réception desdits premier et deuxième signaux.

6. Système selon la revendication 4 ou 5, **caractérisé en ce que**, dans une phase finale de ladite période de détection, une fermeture de ladite entrée-sortie est effectuée, **en ce qu'**ensuite ou sensiblement simultanément ledit premier signal est modifié pour devenir identique audit deuxième signal, et **en ce que** finalement l'émission desdits premier et deuxième signaux est interrompue, notamment en diminuant progressivement la puissance d'émission.

7. Système selon l'une des revendications 4 à 6, **caractérisé en ce que**, lorsqu'une quelconque unité électronique ne reçoit que ledit premier signal, elle envoie également un signal de sortie suite à la fin de détection de ce premier signal.

8. Système selon l'une des revendications 4 à 6, **caractérisé en ce que**, dans une phase initiale de ladite période de détection, ledit premier signal émis dans ladite première région de communication est prévu identique audit deuxième signal et qu'il est ensuite modifié avant ou sensiblement simultanément à l'ouverture de ladite entrée-sortie.

9. Système de détection du passage d'individus ou d'objets par une entrée-sortie (4, 5) à un espace délimité comprenant :
- des premiers moyens d'émission (8) à relativement basse fréquence formant un dispositif de détection associé audit espace délimité, ces premiers moyens d'émission étant agencés pour émettre des premier et deuxième signaux différents dans respectivement des première et deuxième régions de communication (A, B) au moins partiellement séparées l'une de l'autre, ces première et deuxième régions traversant chacune une zone d'entrée-sortie (32) définie par ladite entrée-sortie;
- des unités électroniques portables (40) comprenant des premiers moyens de réception (42) desdits premier et deuxième signaux et des deuxièmes moyens d'émission (44) d'au moins un troisième signal, ces unités étant destinées auxdits individus ou objets;
- des deuxièmes moyens de réception (18) formant en outre ledit dispositif de détection, ces deuxièmes moyens de réception étant agencés pour pouvoir recevoir ledit troisième signal;
ce système comprenant en outre des moyens de détection du sens de passage d'un individu ou objet équipé d'une desdites unités électroniques portables en fonction de la réception desdits premier et deuxième signaux, ces moyens de détection étant agencés pour être activés au moins dès que cette unité reçoit l'un des premier ou deuxième signaux, ledit troisième signal fournissant audit dispositif de détection au moins une information relative à la réception dudit premier signal et/ou dudit deuxième signal, lesdits moyens de détection du sens de passage comportant des moyens de traitement (46, 48) desdits premier et deuxième signaux agencés dans chacune desdites unités électroniques et qui comprennent des moyens de détermination du signal reçu en dernier ou du signal reçu en premier et du signal reçu en dernier.

10. Système selon la revendication 9, **caractérisé en ce que** lesdits moyens de traitement comprennent des moyens pour détecter la fin de réception dudit premier signal et/ou dudit deuxième signal, ledit troisième signal étant émis, éventuellement selon un protocole d'anti-collision, suite à la détection de la fin de la réception dudit premier signal et/ou dudit deuxième signal.

## Patentansprüche

1. System zum Erfassen des Durchgangs von Einzelpersonen oder von Gegenständen durch einen Eingang-Ausgang (4, 5) eines begrenzten Raums (2), umfassend:
- erste Mittel (8) zum Senden mit relativ niedriger Frequenz, die eine dem begrenzten Raum zugeordnete Erfassungsvorrichtung bilden, wobei diese ersten Sendemittel derart beschaffen sind, dass sie ein erstes und ein zweites Signal, die verschieden sind, in einem ersten Übertragungsbereich (A) bzw. in einem zweiten Übertragungsbereich (B), die wenigstens teilweise voneinander getrennt sind, senden, wobei jeder dieses ersten und dieses zweiten Übertragungsbereichs eine durch den Eingang-Ausgang definierte Eingangs-/Ausgangs-Zone (32) durchquert;
- tragbare elektronische Einheiten (40), die erste Mittel (42) zum Empfangen des ersten und des zweiten Signals und zweite Mittel (44) zum Senden wenigstens eines dritten Signals umfassen, wobei diese Einheiten für die besagten Einzelpersonen oder Gegenstände bestimmt sind;
- zweite Empfangsmittel (18), die überdies die Erfassungsvorrichtung bilden, wobei diese zweiten Empfangsmittel derart beschaffen sind, dass sie das dritte Signal empfangen können;
welches System zudem Mittel zum Erfassen der Durchgangsrichtung einer/eines mit einer der tragbaren elektronischen Einheiten ausgerüsteten Einzelperson oder Gegenstands in Abhängigkeit vom Empfang des ersten und des zweiten Signals umfasst, wobei diese Erfassungsmittel derart beschaffen sind, dass sie wenigstens dann aktiviert werden, sobald diese Einheit eines des ersten oder des zweiten Signals empfängt, wobei die zweiten Sendemittel und die zweiten Empfangsmittel mit relativ hoher Frequenz funktionieren, wobei das dritte Signal der Erfassungsvorrichtung wenigstens eine Information bezüglich des Empfangs des ersten Signals und/oder des zweiten Signals liefert, wobei die Mittel zum Erfassen der Durchgangsrichtung Mittel (46, 48) zum Verarbeiten des ersten und des zweiten Signals umfassen, welche Verarbeitungsmittel in jeder der elektronischen Einheiten angeordnet sind und Mittel zum Bestimmen des zuletzt empfangenen Signals oder des zuerst empfangenen Signals und des zuletzt empfangenen Signals umfassen.

2. System nach Anspruch 1, **dadurch gekennzeichnet, dass** die zweiten Empfangsmittel derart beschaffen sind, dass sie das dritte Signal empfangen können, das durch irgendeine der elektronischen Einheiten geliefert wird, die sich in einem dritten Übertragungsbereich (28, 29) befinden, der im Wesentlichen den ersten und den zweiten Übertragungsbereich abdeckt und der über beide Seiten dieser Bereiche gemäss einer Durchgangsrichtung (34) durch den Eingang-Ausgang hinausgeht.

3. System nach Anspruch 1, **dadurch gekennzeichnet, dass** die Verarbeitungsmittel Mittel umfassen, um das Ende des Empfangs des ersten Signals und/oder des zweiten Signals zu erfassen, wobei das dritte Signal im Anschluss an die Erfassung des Endes des Empfangs des ersten Signals und/oder des zweiten Signals, eventuell gemäss einem Antikollisions-Protokoll, gesendet wird.

4. System nach Anspruch 3, in dem der erste Bereich einen dem zweiten Bereich nicht überlagerten Abschnitt (26) aufweist, der sich im Verhältnis zu diesem zweiten Bereich ausserhalb des Eingangs-Ausgangs befindet, **dadurch gekennzeichnet, dass** irgendeine der elektronischen Einheiten, nach Erfassen eines Endes des Empfangs des ersten und des zweiten Signals in einer gegebenen Erfassungsperiode, über die zweiten Sendemittel einerseits ein Eingangssignal sendet, wenn das zuerst und das zuletzt empfangene Signal das erste bzw. das zweite Signal sind, und dass sie andererseits ein Ausgangssignal sendet, wenn das zuerst und das zuletzt empfangene Signal das zweite bzw. das erste Signal sind.

5. System nach Anspruch 4, **dadurch gekennzeichnet, dass** das Eingangs- oder Ausgangssignal nach dem Erfassen des Endes des Empfangs des ersten und des zweiten Signals, eventuell gemäss einem Antikollisions-Protokoll, schnell gesendet wird.

6. System nach Anspruch 4 oder 5, **dadurch gekennzeichnet, dass** in einer Endphase der Erfassungsperiode ein Schliessen des Eingangs-Ausgangs ausgeführt wird, dass danach oder merklich gleichzeitig das erste Signal modifiziert wird, damit es identisch mit dem zweiten Signal wird, und dass schliesslich das Senden des ersten und des zweiten Signals unterbrochen wird, insbesondere indem die Sendeleistung allmählich vermindert wird.

7. System nach einem der Ansprüche 4 bis 6, **dadurch gekennzeichnet, dass** irgendeine elektronische Einheit dann, wenn sie nur das erste Signal empfängt, im Anschluss an das Ende der Erfassung dieses ersten Signals ebenfalls ein Ausgangssignal sendet.

8. System nach einem der Ansprüche 4 bis 6, **dadurch gekennzeichnet, dass** das erste im ersten Übertragungsbereich gesendete Signal in einer Anfangsphase der Erfassungsperiode derart vorgesehen ist, dass es identisch mit dem zweiten Signal ist, und dass es dann vor dem Öffnen des Eingangs-Ausgangs oder merklich gleichzeitig wie dieses Öffnen modifiziert wird.

9. System zum Erfassen des Durchgangs von Einzelpersonen oder von Gegenständen durch einen Eingang-Ausgang (4, 5) eines begrenzten Raums, umfassend:
- erste Mittel (8) zum Senden mit relativ niedriger Frequenz, die eine dem begrenzten Raum zugeordnete Erfassungsvorrichtung bilden, wobei diese ersten Sendemittel derart beschaffen sind, dass sie ein erstes und ein zweites Signal, die verschieden sind, in einem ersten Übertragungsbereich (A) bzw. in einem zweiten Übertragungsbereich (B), die wenigstens teilweise voneinander getrennt sind, senden, wobei jeder dieses ersten und dieses zweiten Übertragungsbereichs eine durch den Eingang-Ausgang definierte Eingangs-/Ausgangs-Zone (32) durchquert;
- tragbare elektronische Einheiten (40), die erste Mittel (42) zum Empfangen des ersten und des zweiten Signals und zweite Mittel (44) zum Senden wenigstens eines dritten Signals umfassen, wobei diese Einheiten für die besagten Einzelpersonen oder Gegenstände bestimmt sind;
- zweite Empfangsmittel (18), die überdies die Erfassungsvorrichtung bilden, wobei diese zweiten Empfangsmittel derart beschaffen sind, dass sie das dritte Signal empfangen können;
welches System zudem Mittel zum Erfassen der Durchgangsrichtung einer/eines mit einer der tragbaren elektronischen Einheiten ausgerüsteten Einzelperson oder Gegenstands in Abhängigkeit vom Empfang des ersten und des zweiten Signals umfasst, wobei diese Erfassungsmittel derart beschaffen sind, dass sie wenigstens dann aktiviert werden, sobald diese Einheit eines des ersten oder des zweiten Signals empfängt, wobei das dritte Signal der Erfassungsvorrichtung wenigstens eine Information bezüglich des Empfangs des ersten Signals und/oder des zweiten Signals liefert, wobei die Mittel zum Erfassen der Durchgangsrichtung Mittel (46, 48) zum Verarbeiten des ersten und des zweiten Signals umfassen, welche Verarbeitungsmittel in jeder der elektronischen Einheiten angeordnet sind und Mittel zum Bestimmen des zuletzt empfangenen Signals oder des zuerst empfangenen Signals und des zuletzt empfangenen Signals umfassen.

10. System nach Anspruch 9, **dadurch gekennzeichnet, dass** die Verarbeitungsmittel Mittel umfassen, um das Ende des Empfangs des ersten Signals und/oder des zweiten Signals zu erfassen, wobei das dritte Signal im Anschluss an die Erfassung des Endes des Empfangs des ersten Signals und/oder des zweiten Signals, eventuell gemäss einem Antikollisions-Protokoll, gesendet wird.

## Claims

1. System of detecting the passing of individuals or objects through an entrance-exit (4, 5) to a delimited space (2) comprising:
- a first, relatively low frequency transmission means (8) forming a detection device associated with said delimited space, said first transmission means being arranged to transmit different first and second signals respectively in first and second communication areas (A, B) which are at least partially separate from each other, said first and second areas each crossing an entrance-exit area (32) defined by said entrance-exit;
- portable electric units (40) comprising a first means (42) of receiving said first and second signals and a second means (44) of transmitting at least a third signal, said units being intended for said individuals or objects;
- a second receiving means (18) also forming said detection device, said second receiving means being arranged to be capable of receiving said third signal;
said system further comprising a means of detecting the direction of passing of an individual or object provided with one of said portable electronic units as a function of reception of said first and second signals, said detection means being arranged to be actuated at least as soon as said unit receives one of the first or second signals, said second transmission means and said second reception means operating at a relatively high frequency, said third signal supplying said detection device with at least one piece of information regarding reception of said first signal and/or said second signal, said means of detecting the direction of passing comprising a means (46, 48) of processing said first and second signals arranged in each of said electronic units and comprising a means of determining the last received signal or the first received signal and the last received signal.

2. System according to claim 1, **characterized in that** said second receiving means is arranged to be capable of receiving said third signal supplied by any of said electronic units located in a third communication area (28, 29) which essentially covers said first and second communication areas and which extends on either side of said two areas in the direction of passing (34) through said entrance-exit.

3. System according to claim 1, **characterized in that** said processing means includes means of detecting the end of reception of said first signal and/or of said second signal, said third signal being transmitted, possibly in accordance with an anti-collision protocol, following detection of the end of reception of said first signal and/or of said second signal.

4. System according to claim 3, wherein said first area has one portion (25) which does not overlap with said second area which is located on the external side of said entrance-exit relative to said second area, **characterized in that**, after detection of the end of reception of said first and second signals in a given detection period, any one of the electronic units sends, via said second transmission means, on the one hand, an input signal when the first and last received signals are respectively said first and second signals and, on the other hand, an output signal when the first and last received signals are respectively said second and first signals.

5. System according to claim 4, **characterized in that**, said input or output signal is transmitted rapidly, possibly in accordance with an anti-collision protocol, after detection of the end of reception of said first and second signals,

6. System according to claim 4 or 5, **characterized in that** in a final phase of said detection period, said entrance-exit is closed, **in that** next, or substantially simultaneously, said first signal is modified to become identical to said second signal, and **in that** finally the transmission of said first and second signals is interrupted, particularly by gradually decreasing transmission power.

7. System according to any of claims 4 to 6, **characterized in that** when any one electronic unit only receives said first signal, said unit also sends an output signal following the end of detection of said first signal.

8. System according to any of claims 4 to 6, **characterized in that**, in an initial phase of said detection period, said first signal transmitted in said first communication area is identical to said second signal and is then modified prior to, or substantially simultaneously with the opening of said entrance-exit.

9. System of detecting individuals or objects passing through an entrance-exit (4, 5) to a delimited space (2) comprising:
- a first, relatively low frequency transmission means (8) forming a detection device associated with said delimited space, said first transmission means being arranged to transmit different first and second signals respectively in first and second communication areas (A, B) which are at least partially separate from each other, said first and second areas each crossing an entrance-exit area (32) defined by said entrance-exit;
- portable electric units (40) comprising a first means (42) of receiving said first and second signals and a second means (44) of transmitting at least a third signal, said units being intended for said individuals or objects;
- a second receiving means (18) also forming said detection device, said second receiving means being arranged to be capable of receiving said third signal;
said system further comprising a means of detecting the direction of passing of an individual or object provided with one of said portable electronic units as a function of reception of said first and second signals, said detection means being arranged to be actuated at least as soon as said unit receives one of the first or second signals, said third signal supplying said detection device with at least one piece of information regarding reception of said first signal and/or of said second signal, said means of detecting the direction of passing comprising a means (46, 48) of processing said first and second signals arranged in each of said electronic units and which includes a means of determining the last received signal or the first received signal and the last received signal.

10. System according to claim 9, **characterized in that** said processing means includes a means for detecting the end of reception of said first signal and/or of said second signal, said third signal being transmitted, possibly in accordance with an anti-collision protocol, following detection of the end of reception of said first signal and/or of said second signal.
